# EUROPEAN PATENT SPECIFICATION

(11) **EP 4 347 085 B1**
(45) Date of publication and mention of the grant of the patent: **13.08.2025**
(21) Application number: 21729564.1
(22) Date of filing: 02.06.2021
(51) Int. Cl.: B01D 17/04, B01D 17/12, B01F 25/40

(54) **METHOD AND SYSTEM FOR PURIFICATION OF OIL**
VERFAHREN UND SYSTEM ZUR REINIGUNG VON ÖL
PROCÉDÉ ET SYSTÈME DE PURIFICATION D'HUILE

(43) Date of publication of application: 10.04.2024
(73) Proprietor: SKF MFR Technology AB, 12030 Stockholm (SE)
(72) Inventor: HURNASTI, Lasse, 83172 Östersund (SE)
(74) Representative: Kohl, Thomas
(86) International application number: PCT/EP2021/064801
(87) International publication number: WO 2022/253426

(56) References cited:
- US-A- 4 978 365
- US-A- 5 487 835
- US-A- 6 159 442
- US-B1- 10 990 114

## Description

### TECHNICAL FIELD OF THE INVENTION

The present invention relates to a method and a system for purification of oil.

### BACKGROUND OF THE INVENTION

Purification of oils, such as for example slop oil, waste oil, slurry oil, crude oil, industrial oil, petroleum products or bio-oils is important for the possibility to use/reuse oils and therefore an important factor for the environmental future and the limited nature resources of oils. Purification of slop oil (and waste oil, hereafter only referred to as slop oil) is problematic in many ways. Slop oil can comprise oil, water, particles and emulsion phase. The particles can stabilize the emulsion phase and complicate a purification process. Purification of industrial emulsions comprising water and oil, such as for example cutting fluids is also an important environmental issue.

In slop oil treatment, centrifuge systems are often used for example for separation of oil and water. Slop oils comprise different ingredients, such as different types of oils, water and particles, in different amounts. Hereby a composition of the slop oil will differ between each batch of slop oil to be purified. For example, a density and a viscosity of the oil in the slop oil will differ between different slop oils. Different types of oils may be present in the slop oil in different ratios and the different oils may have different viscosities. Hereby treatment conditions are very different for all batches of slop oil to be purified. This may be the case also for other types of oil to be purified, such as different types of industrial oils. A good purification result will not be achieved when different contaminated oils, such as different batches of slop oils are purified in the same system.

Small water droplets are hard to remove from oil. For example, disc stack centrifugal separators are more effective for removing water droplets above a certain size. This size is dependent on for example both the centrifugal separator itself and on the viscosity of the oil. Small water droplets are also hard to get rid of in other types of separation devices such as for example filter devices and settling tanks.

Mixing devices are often used in oil purification systems for example for mixing of contaminated oil and a separation aid. In these mixing devices there may be a risk that water (heavy phase) present in the contaminated oil is turned into small droplets of water which are hard to separate from the oil. An example of a mixing system is provided in US5487835.

### SUMMARY

An object of the present invention is to provide an improved method and system for purification of contaminated oils.

A further object of the invention is to provide a method and system for purification of contaminated oil with an improved mixing system.

This is achieved by a method and a system according to the independent claims. According to one aspect of the invention a method for purification of contaminated oil is provided comprising the steps as defined in claim 1.

According to another aspect of the invention an oil purification system is provided as defined in claim 8.

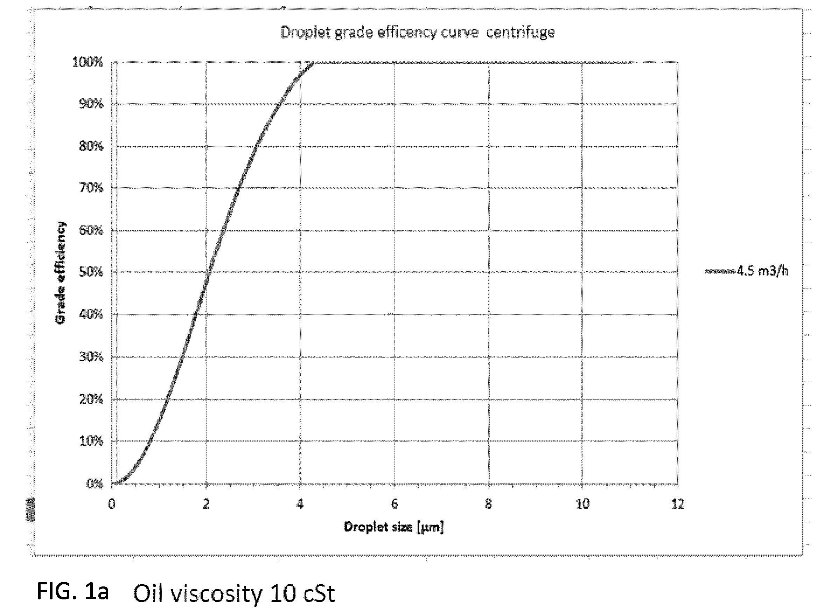

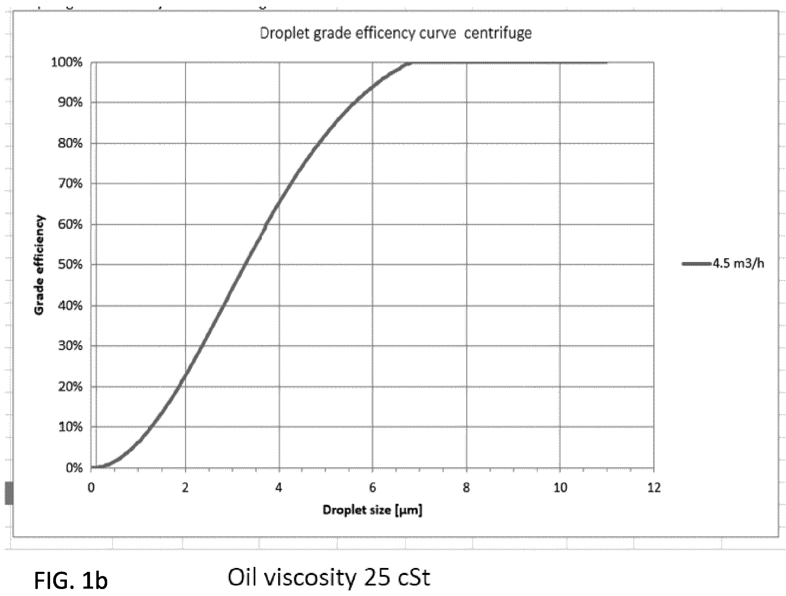

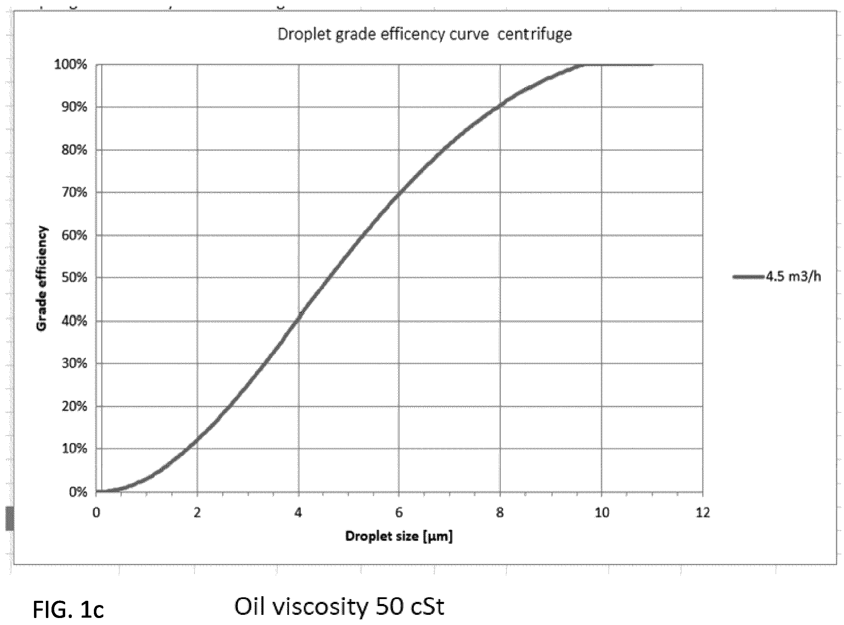

Hereby, by connecting one or more of the mixers into the purification system in dependence of a measured pressure difference over at least one of the mixers or over the whole mixing system it can be assured that the pressure difference will not be too high. By connecting more mixers in the mixing system the pressure difference can be kept low while the flow rate through the system can be upheld. A higher pressure difference over a mixer will provide droplets of heavy phase, for example water or salty water, of smaller size, i.e. the higher pressure difference the smaller droplets. Droplets of heavy phase in a contaminated oil are hard to separate from the light phase, i.e. from the oil, when the droplets are smaller than a certain limit. For example, centrifugal separators are effective to remove droplets of a certain size to 100% but less effective for smaller droplets. This is also dependent on for example the viscosity of the oil which can be seen in Figures 1a, 1b, 1c. By connecting more mixers in the mixing system for the contaminated oil to be mixed in, a flowrate through the system can be kept and still the droplet sizes of the heavy phase can be kept above a certain lower limit. The alternative, if only one mixer is used, would be to lower the flowrate through the mixer in order to keep a pressure difference below a certain threshold and thereby limit the risk to produce too small heavy phase droplets. However, the advantage with connecting one or more mixers in dependence of the pressure difference is that the flowrate and total system capacity can be upheld.

In the embodiment of the invention the oil purification system further comprises a control system, wherein said control system is provided in communication contact with the pressure measuring device and with the at least one valve and wherein the control system is configured to control the at least one valve such that the contaminated oil is allowed to enter one or more of the mixers in dependence of the measured pressure difference over at least one of the mixers and/or over the complete mixing system.

In one embodiment of the invention said step of controlling the at least one valve in dependence of the measured pressure difference comprises allowing contaminated oil to enter two or more mixers when the measured pressure difference is increasing above a pressure difference threshold. In one embodiment of the invention said control system is configured to control the at least one valve to allow contaminated oil to enter two or more mixers when the measured pressure difference is increasing above a pressure difference threshold. By adding a mixer the pressure difference will decrease below the pressure difference threshold and the sizes of heavy phase droplets will be kept large enough for being effectively separated.

In one embodiment of the invention the step of controlling the at least one valve comprises to control the at least one valve to allow contaminated oil to enter one additional mixer when a measured pressure difference increases above a pressure difference threshold. In one embodiment of the invention said control system is configured to control the at least one valve to allow contaminated oil to enter one additional mixer when a measured pressure difference increases above a pressure difference threshold.

In the embodiment of the invention said step of measuring a pressure difference over at least one of the mixers and/or over the complete mixing system comprises measuring at least two pressures by a pressure measuring device comprising at least two pressure sensors which are positioned in the mixing system such that they can measure a pressure difference over at least one of the mixers and/or over the complete mixing system and wherein the step of controlling the at least one valve in dependence of the measured pressure difference comprises controlling the at least one valve from a control system which is provided in communication contact with the pressure measuring device and the at least one valve.

In one embodiment of the invention the method further comprises the step of adding a separation aid to the contaminated oil before or when the contaminated oil is mixed in the mixing system. In one embodiment of the invention the oil purification system further comprises a separation aid tank which is connected in the system such that separation aid can be added from the separation aid tank to the contaminated oil before it is provided into the mixing system or directly into each of the mixers.

In one embodiment of the invention said mixers are static inline mixers.

In one embodiment of the invention the step of separating the contaminated oil in the separation device comprises centrifuging the contaminated oil, wherein the separation device is a centrifugal separator and whereby a heavy phase and a light phase are retrieved from the centrifugal separator.

In one embodiment of the invention the method further comprises a step of measuring one or more properties in a light phase and/or heavy phase retrieved from a light phase outlet and/or heavy phase outlet of the separation device, wherein said one or more properties comprise one or more of a density, a viscosity, a flow rate, an amount of heavy phase content in the light phase and wherein said step of controlling the at least one valve in the mixing system is further dependent on at least one value of the measured one or more properties. In one embodiment of the invention the oil purification system further comprises at least one sensor positioned in fluid connection with a light phase outlet from the separation device and/or a heavy phase outlet from the separation device, wherein said sensor is configured for measuring one or more properties, wherein said one or more properties comprises one or more of a density, a viscosity, an amount of heavy phase content in the light phase and a flow rate, wherein said at least one sensor is provided in communication contact with the control system and wherein the control system is configured to control the at least one valve in dependence of at least one value of said one or more measured properties.

In one embodiment of the invention the pressure difference threshold is defined in dependence of at least one value of the measured one or more properties. In one embodiment of the invention the control system is configured to define the pressure difference threshold in dependence of at least one value of the measured one or more properties.

### BRIEF DESCRIPTION OF THE DRAWINGS

Figures 1a, 1b and 1c show diagrams of a droplet grade efficiency for a centrifugal separator for three different oil viscosities.
Figure 2 shows schematically an oil purification system according to one embodiment of the invention.
Figure 3 is a flow chart of a method according to one embodiment of the invention.

### DETAILED DESCRIPTION OF THE EMBODIMENTS

When purifying contaminated oil, such as for example slop oil, waste oil, slurry oil, crude oil, industrial oil, petroleum products or bio-oils, a mix of light phase, a heavy phase and other contaminants need to be separated. The light phase comprises oil of different types and the heavy phase comprises for example water, water comprising salt, such as brine or water with added mono ethylene glycol (MEG). Droplets of heavy phase are often mixed into the light phase and these droplets need to be separated from the light phase. In for example a centrifugal separator, droplets of heavy phase can be separated out. However, the efficiency for removing the droplets is dependent on the size of the droplets. This is also different for different centrifugal separators. It is also dependent on the viscosity of the oil. This is shown in Figures 1a, 1b and 1c where diagrams of a droplet grade efficiency for a centrifugal separator for three different oil viscosities, 10cSt, 25cSt and 50cSt are shown. Hereby it is important to keep droplet sizes of the heavy phase above a certain size, i.e. the separation efficiency will be better if the smallest droplet sizes are avoided.

In oil purification systems, mixing devices are often provided, for example for mixing of a separation aid, also called demulsifiers or booster, into the contaminated oil. In a mixing device there is a risk that droplets of heavy phase of different sizes are produced. According to the invention a pressure difference over the mixing device is monitored in order to avoid a too high pressure difference. This is because the sizes of the droplets will be smaller and smaller the higher the pressure difference is over the mixing device. However, a pressure difference threshold to stay below will be dependent on different factors, such as for example the viscosity of the light phase (i.e. the oil), the density of the light phase, the density of the heavy phase, the flow rate through the mixing device and the type of separation device to be used as a next step of purification and possibly also exact settings in this separation device. For example, if a centrifugal separator is used as the next separation device this centrifugal separator will be effective to certain degrees for certain droplet sizes as shown in Figures 1a, b and c. Furthermore, feedback information from purification results after a next separation device can be used for setting a proper pressure difference threshold, e.g. a measure of an amount of heavy phase in the retrieved light phase from the separation device can be used for lowering or raising the pressure difference threshold to stay under.

Further according to the invention an additional mixer can be connected in the mixing device when a pressure difference threshold has been reached as measured by a pressure measuring device. Hereby the number of used mixers (connected in parallel) is chosen in dependence of a measured pressure difference over the complete mixing device (comprising all the mixers) or over at least one of the mixers in the mixing device. This is suitable because instead of lowering a flow rate through only one mixer in order to stay below a pressure difference, more mixers are connected and a flow rate can be kept and hereby a capacity of the system can be upheld.

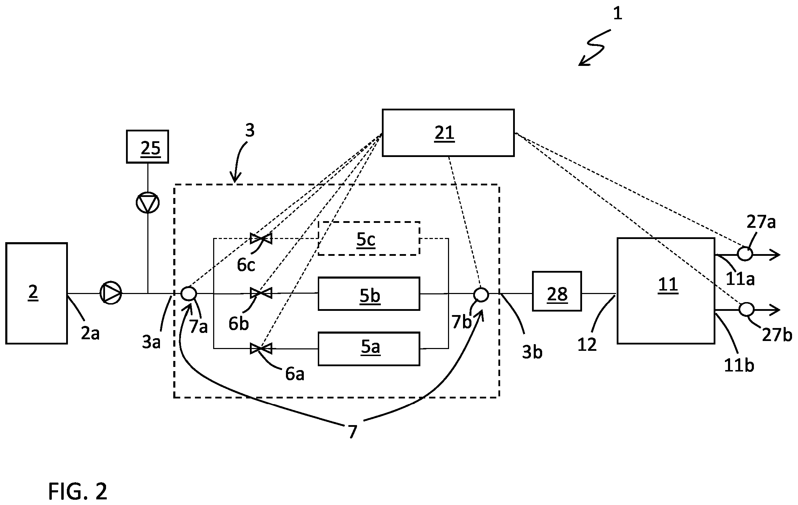

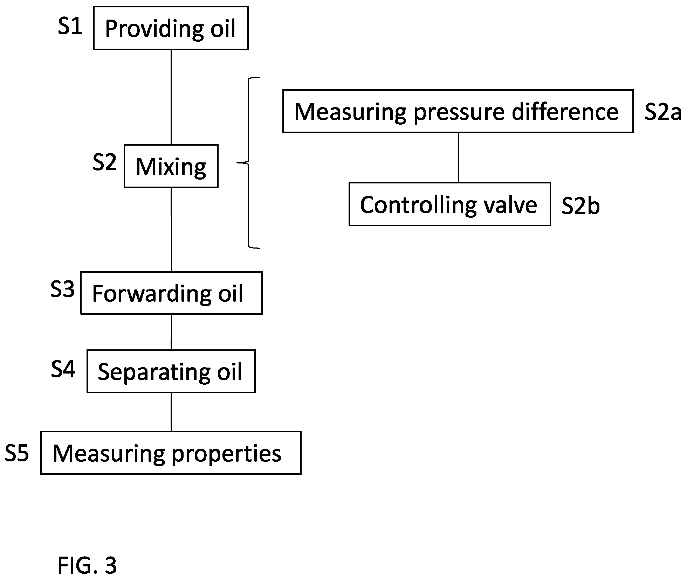

Figure 2 shows schematically an oil purification system 1 according to one embodiment of the invention. Figure 3 is a flow chart of a method according to one embodiment of the invention. A description of some embodiments of the invention will now be given with reference to both Figures 2 and 3.

An oil purification system 1 is provided comprising a mixing system 3. The mixing system 3 comprises an inlet 3a via which contaminated oil which is purified in the oil purification system can be provided into the mixing system 3. The oil purification system 1 comprises further a separation device 11 comprising an inlet 12 which is fluidly connected to an outlet 3b of said mixing system 3, possibly via one or more other units 28 of the oil purification system. Said other units 28 can for example be one or more buffer tanks, other separation devices such as filtration devices, settling tanks or centrifugal separators, pumps, sensors and other units which may be used in an oil purification system. The mixing system 3 comprises at least two mixers 5a, 5b, 5c connected in parallel. In Figure 2 an optional third mixer 5c is shown in dotted lines. More than three mixers can also be provided in the mixing system 3. The mixing system 3 comprises also at least one valve 6a, 6b, 6c which can be controlled for allowing contaminated oil to enter one or more of the mixers 5a, 5b, 5c. If only two mixers 5a, 5b are provided one or two valves 6a, 6b may be provided and if three mixers 5a, 5b, 5c are provided two or three valves 6a, 6b, 6c may be provided. Hereby the number of valves may be one less than the number of mixers. However, in Figure 2 one valve is provided for each of the mixers. However, in some embodiments of the invention contaminated oil can be allowed to always pass through one of the mixers and the other parallel mixers may be connected or not in dependence on a measured pressure difference over the mixing system 3. Hereby one of the valves 6a, 6b, 6c in Figure 2 may be omitted. The mixing system 3 comprises further a pressure measuring device 7 comprising at least two pressure sensors 7a, 7b which are positioned in the mixing system 3 such that they can measure a pressure difference over at least one of the mixers 5a, 5b, 5c and/or over the complete mixing system 3. In Figure 2 the pressure measuring device 7 is provided for measuring a pressure difference over the whole mixing system 3. Hereby one pressure is measured at an inlet 3a of the mixing system 3 by an inlet pressure sensor 7a positioned in fluid connection with the inlet 3a of the mixing system 3 and another pressure is measured at an outlet 3b of the mixing system 3 by an outlet pressure sensor 7b positioned in fluid connection with the outlet 3b of the mixing system 3. However, in another embodiment a pressure difference can instead be measured for each of the mixers. In still another embodiment it may be enough to measure the pressure difference over only one of the mixers. If for example only two mixers 5a, 5b are provided the pressure difference over one of the mixers which is always in use can be measured and the other mixer can be connected in dependence of this measured pressure difference.

Hereby an oil purification system is provided where a number of mixers 5a, 5b, 5c are provided in parallel in a mixing system. One or more valves 6a, 6b, 6c are provided such that the mixers can be connected or disconnected for the oil to pass through the mixing system 3. Furthermore, a pressure measuring device is provided such that a pressure difference can be measured over the mixing system 3. The possibility to connect one or more mixers 5a, 5b, 5c is suitable for avoiding a too high pressure difference over the mixing system 3 and thereby avoiding too small droplets of heavy phase to be produced in the mixing system 3 as discussed above. By avoiding the smallest droplets of heavy phase, the light phase and the heavy phase can be more effectively separated in the separation device 11. Small droplets of heavy phase are often hard to separate out completely.

The oil purification system may also comprise a control system 21 which is provided in communication contact with the pressure measuring device 7 and with the at least one valve 6a, 6b, 6c. The control system 21 is configured to control the at least one valve 6a, 6b, 6c such that the contaminated oil is allowed to enter one or more of the mixers 5a, 5b, 5c in dependence of the measured pressure difference over at least one of the mixers 5a, 5b, 5c and/or over the complete mixing system 3.

A method for purification of contaminated oil according to some embodiments of the invention comprises the steps as described in order below:
S1: Providing contaminated oil into a mixing system 3 comprising at least two mixers 5a, 5b, 5c connected in parallel and at least one valve 6a, 6b, 6c which can be controlled for allowing contaminated oil to enter one or more of the mixers 5a, 5b, 5c.
S2: Mixing the contaminated oil in the mixing system 3. The step of mixing S2 comprises:
   S2a: Measuring a pressure difference over at least one of the mixers 5a, 5b, 5c and/or over the complete mixing system 3. Said step comprises in some embodiments to measure at least two pressures by a pressure measuring device 7 comprising at least two pressure sensors 7a, 7b as described above. The control system 21 is hereby in communication contact with the inlet pressure sensor 7a and the outlet pressure sensor 7b and is configured to compare the pressure at the inlet 3a and the pressure at the outlet 3b for arriving at the pressure difference.

The step of mixing comprises further:
S2b: Controlling the at least one valve 6a, 6b, 6c in the mixing system 3 such that the contaminated oil is allowed to enter one or more of the mixers 5a, 5b, 5c in dependence of the measured pressure difference. Said step of controlling the at least one valve 6a, 6b, 6c in dependence of the measured pressure difference can in some embodiments comprise to allow contaminated oil to enter two or more mixers 5a, 5b, 5c when the measured pressure difference is increasing above a pressure difference threshold. In some embodiments of the invention the step of controlling the at least one valve 6a, 6b, 6c comprises to control the at least one valve 6a, 6b, 6c to allow contaminated oil to enter one additional mixer (5b, 5c) when a measured pressure difference increases above a pressure difference threshold. Hereby, only one mixer 5a can be used initially as long as the measured pressure difference is below the pressure difference threshold and when the measured pressure difference increases above said pressure difference threshold one additional mixer 5b is connected for the oil to pass. Hereby the pressure difference will decrease. As long as the measured pressure difference is kept below the pressure difference threshold the two mixers 5a, 5b are used but if the measured pressure difference increases once again above the pressure difference threshold one additional mixer 5c can be connected and so on. In the same way, a mixer can be disconnected if the measured pressure difference decreases below another pressure difference threshold, here called a lower pressure difference threshold. The lower pressure difference threshold is lower than the pressure difference threshold. In some embodiments of the invention more different pressure difference thresholds may be used for controlling connection and disconnection of the mixers 5a, 5b, 5c. The step of controlling the at least one valve 6a, 6b, 6c in dependence of the measured pressure difference comprises controlling the at least one valve 6a, 6b, 6c from the control system 21 which is provided in communication contact with the pressure measuring device 7 and the at least one valve 6a, 6b, 6c.
S3: Forwarding the mixed contaminated oil from the mixing system 3 to a separation device 11, possibly via one or more other units 28 of the oil purification system.
S4: Separating the contaminated oil in the separation device 11.

In some embodiments of the invention the method further comprises the step of:
S5: Measuring one or more properties in a light phase and/or heavy phase retrieved from a light phase outlet 11a and/or heavy phase outlet 11b of the separation device 11, wherein said one or more properties comprise one or more of a density, a viscosity, a flow rate, an amount of heavy phase content in the light phase and wherein said step of controlling S2b the at least one valve 6a, 6b, 6c in the mixing system 3 is further dependent on at least one value of the measured one or more properties.

Hereby, the oil purification system 1 in some embodiments comprises at least one sensor 27a, 27b positioned in fluid connection with a light phase outlet 11a from the separation device 11 and/or a heavy phase outlet 11b from the separation device 11, wherein said sensor 27a, 27b is configured for measuring one or more properties, wherein said one or more properties comprises one or more of a density, a viscosity, an amount of heavy phase content in the light phase and a flow rate. Said at least one sensor 27a, 27b is provided in communication contact with the control system 21 and the control system 21 is configured do control the at least one valve 6a, 6b, 6c in dependence of at least one value of said one or more measured properties.

In some embodiments of the invention the one or more pressure difference thresholds are defined in dependence of at least one value of the measured one or more properties. Hereby different pressure difference thresholds are defined depending on at least one of the measured properties. The control system 21 is configured to define the one or more pressure difference thresholds in dependence of at least one value of the measured one or more properties.

For example, a pressure difference threshold can be defined based on a measured viscosity of the light phase retrieved from the light phase outlet 11a from the separation device 11. If the light phase is measured to have a comparatively low viscosity the pressure difference threshold can be set to be comparatively high, i.e. only one mixer is needed for pressure differences measured to be below said pressure difference threshold. If a viscosity of the light phase is measured to be higher than a certain threshold, the pressure difference threshold needs to be set lower than for the lower viscosity oil. I.e. more mixers are needed even for lower pressure differences. A correspondence between density of the light phase retrieved from the light phase outlet 11a and the pressure difference threshold to be set can be the same, i.e. a higher density of the light phase would need a lower pressure difference threshold before more mixers are connected in the mixing system. This is due to the separability grade change of the separation device 11 were decreased density difference between heavy phase and light phase means that droplets need to be larger (separability gets worse). The opposite is also valid meaning increased density difference gives higher pressure difference threshold (separability increases). Flow rate increase gives a decreased retention time inside separation device 11 which means that droplets need to be larger (separability gets worse) to obtain the same output results. The change of performance can be detected by the water (heavy phase) in oil (light phase) measurement on the light phase outlet. The control system 21 is hereby configured for combining the information received from the at least one sensor 27a, 27b provided in fluid connection with the light phase outlet 11a and/or the heavy phase outlet 11b from the separation device 11 into at least one pressure difference threshold. The at least one pressure difference threshold will hereby have different values for different contaminated oils to be purified and are calculated for each purification process or can even be continually updated during the purification process if measurements of the parameters are changed during purification.

The method comprises furthermore in some embodiments of the invention a step of adding a separation aid to the contaminated oil before or when the contaminated oil is mixed in the mixing system 3. The oil purification system 1 may hereby also comprise a separation aid tank 25 which is connected in the system such that separation aid can be added from the separation aid tank 25 to the contaminated oil before it is provided into the mixing system 3 or directly into each of the mixers 5a, 5b, 5c. The separation aid can be for example a demulsifier.

The mixers 5a, 5b, 5c are in some embodiments of the invention static inline mixers. Other types of mixers which can be used are for example laminar and turbulent static mixers, a mixing pump or a pipe restriction creating pressure drop. The static inline mixers 5a, 5b, 5c are designed for providing a controlled minimum droplet size. The mixers 5a, 5b, 5c can be designed specifically for the used separation device 11 such that the sizes of the droplets produced in the mixers 5a, 5b, 5c are effectively separated in the separation device 11. If the separation device for example is a centrifugal separator the size of the droplets produced in the mixers should suitably be kept above a droplet size which this centrifugal separator will separate at 100%. The droplet size efficiency for a centrifugal separator is for example dependent on density difference between heavy phase and light phase and oil viscosity which is shown in Figures 1a, 1b, and 1c with focus on the viscosity change and the separability.

In some embodiments of the invention the separation device 11 is a centrifugal separator. Hereby the contaminated oil is centrifuged in the separation device 11 whereby a heavy phase and a light phase are retrieved from the centrifugal separator 11. Other examples of separation devices 11 which can be used in the oil purification device according to the invention are settling tanks, filter devices, electrostatic coalescers, coalescer filters, or FWKO drum.

## Claims

1. A method for purification of contaminated oil comprising the steps of:
- providing contaminated oil into a mixing system (3) comprising at least two mixers (5a, 5b, 5c) connected in parallel and at least one valve (6a, 6b, 6c) which can be controlled for allowing contaminated oil to enter one or more of the mixers (5a, 5b, 5c);
- mixing the contaminated oil in the mixing system (3);
- forwarding the mixed contaminated oil from the mixing system (3) to a separation device (11), possibly via one or more other units (28) of the oil purification system;
- separating the contaminated oil in the separation device (11),
wherein the step of mixing comprises:
- measuring a pressure difference over at least one of the mixers (5a, 5b, 5c) and/or over the complete mixing system (3), said measuring comprising measuring at least two pressures by a pressure measuring device (7) comprising at least two pressure sensors (7a, 7b) which are positioned in the mixing system (3) such that they can measure a pressure difference over at least one of the mixers (5a, 5b, 5c) and/or over the complete mixing system (3); and
- controlling the at least one valve (6a, 6b, 6c) in the mixing system (3) such that the contaminated oil is allowed to enter one or more of the mixers (5a, 5b, 5c) in dependence of the measured pressure difference, said controlling comprising controlling the at least one valve (6a, 6b, 6c) from a control system (21) which is provided in communication contact with the pressure measuring device (7) and the at least one valve (6a, 6b, 6c).

2. Method according to claim 1, wherein said step of controlling the at least one valve (6a, 6b, 6c) in dependence of the measured pressure difference comprises allowing contaminated oil to enter two or more mixers (5a, 5b, 5c) when the measured pressure difference is increasing above a pressure difference threshold.

3. Method according to claim 1 or 2, wherein the step of controlling the at least one valve (6a, 6b, 6c) comprises to control the at least one valve (6a, 6b, 6c) to allow contaminated oil to enter one additional mixer (5b, 5c) when a measured pressure difference increases above a pressure difference threshold.

4. Method according to any one of the preceding claims, further comprising the step of adding a separation aid to the contaminated oil before or when the contaminated oil is mixed in the mixing system (3).

5. Method according to any one of the preceding claims, wherein the step of separating the contaminated oil in the separation device (11) comprises centrifuging the contaminated oil, wherein the separation device is a centrifugal separator (11) and whereby a heavy phase and a light phase are retrieved from the centrifugal separator (11).

6. Method according to any one of the preceding claims, further comprising a step of measuring one or more properties in a light phase and/or heavy phase retrieved from a light phase outlet (11a) and/or heavy phase outlet (11b) of the separation device (11), wherein said one or more properties comprise one or more of a density, a viscosity, a flow rate, an amount of heavy phase content in the light phase and wherein said step of controlling the at least one valve (6a, 6b, 6c) in the mixing system (3) is further dependent on at least one value of the measured one or more properties.

7. Method according to claims 2 or 3 and 6, wherein the pressure difference threshold is defined in dependence of at least one value of the measured one or more properties.

8. An oil purification system comprising:
- a mixing system (3) comprising an inlet (3a) via which contaminated oil which will be purified in the oil purification system can be provided into the mixing system (3);
- a separation device (11) comprising an inlet (12) which is fluidly connected to an outlet (3b) of said mixing system (3), possibly via one or more other units (28) of the oil purification system,
wherein said mixing system (3) comprises at least two mixers (5a, 5b, 5c) connected in parallel and at least one valve (6a, 6b, 6c) which can be controlled for allowing contaminated oil to enter one or more of the mixers (5a, 5b, 5c), said mixing system (3) further comprising a pressure measuring device (7) comprising at least two pressure sensors (7a, 7b) which are positioned in the mixing system (3) such that they can measure a pressure difference over at least one of the mixers (5a, 5b, 5c) and/or over the complete mixing system (3),
wherein said oil purification system further comprises a control system (21), wherein said control system (21) is provided in communication contact with the pressure measuring device (7) and with the at least one valve (6a, 6b, 6c) and wherein the control system (21) is configured to control the at least one valve (6a, 6b, 6c) such that the contaminated oil is allowed to enter one or more of the mixers (5a, 5b, 5c) in dependence of the measured pressure difference over at least one of the mixers (5a, 5b, 5c) and/or over the complete mixing system (3).

9. Oil purification system according to claim 8, wherein said control system (21) is configured to control the at least one valve (6a, 6b, 6c) to allow contaminated oil to enter two or more mixers (5a, 5b, 5c) when the measured pressure difference is increasing above a pressure difference threshold.

10. Oil purification system according to claim 8 or 9, wherein said control system (21) is configured to control the at least one valve (6a, 6b, 6c) to allow contaminated oil to enter one additional mixer (5b, 5c) when a measured pressure difference increases above a pressure difference threshold.

11. Oil purification system according to any one of the claims 8-10, further comprising a separation aid tank (25) which is connected in the system such that separation aid can be added from the separation aid tank (25) to the contaminated oil before it is provided into the mixing system (3) or directly into each of the mixers (5a, 5b, 5c).

12. Oil purification system according to any one of the claims 8-11, wherein said mixers (5a, 5b, 5c) are static inline mixers.

13. Oil purification system according to any one of the claims 8-12, wherein said separation device (11) is a centrifugal separator (11).

14. Oil purification system according to claim 10 and any one of the claims 8-13, further comprising at least one sensor (27a, 27b) positioned in fluid connection with a light phase outlet (11a) from the separation device (11) and/or a heavy phase outlet (11b) from the separation device (11), wherein said sensor (27a, 27b) is configured for measuring one or more properties, wherein said one or more properties comprises one or more of a density, a viscosity, an amount of heavy phase content in the light phase and a flow rate, wherein said at least one sensor (27a, 27b) is provided in communication contact with the control system (21) and wherein the control system (21) is configured to control the at least one valve (6a, 6b, 6c) in dependence of at least one value of said one or more measured properties.

15. Oil purification system according to claim 9 or 10 and claim 14, wherein the control system (21) is configured to define the pressure difference threshold in dependence of at least one value of the measured one or more properties.

## Patentansprüche

1. Verfahren zur Reinigung von verunreinigtem Öl, das die folgenden Schritte umfasst:
- Bereitstellen von verunreinigtem Öl in ein Mischsystem (3), das mindestens zwei parallel verbundene Mischer (5a, 5b, 5c) und mindestens ein Ventil (6a, 6b, 6c) umfasst, das so gesteuert werden kann, dass verunreinigtes Öl in einen oder mehrere der Mischer (5a, 5b, 5c) gelangen kann;
- Mischen des verunreinigten Öls im Mischsystem (3);
- Weiterleiten des gemischten verunreinigten Öls aus dem Mischsystem (3) zu einer Abscheidevorrichtung (11), gegebenenfalls über eine oder mehrere andere Einheiten (28) des Ölreinigungssystems;
- Abscheiden des verunreinigten Öls in der Abscheidevorrichtung (11),
wobei der Schritt des Mischens Folgendes umfasst:
- Messen einer Druckdifferenz über mindestens einen der Mischer (5a, 5b, 5c) und/oder über das gesamte Mischsystem (3), wobei das Messen das Messen von mindestens zwei Drücken durch eine Druckmessvorrichtung (7) umfasst, die mindestens zwei Drucksensoren (7a, 7b) umfasst, die in dem Mischsystem (3) so positioniert sind, dass sie eine Druckdifferenz über mindestens einen der Mischer (5a, 5b, 5c) und über das gesamte Mischsystem (3) messen können; und
- Steuern des mindestens einen Ventils (6a, 6b, 6c) in dem Mischsystem (3), sodass das verunreinigte Öl in Abhängigkeit von der gemessenen Druckdifferenz in einen oder mehrere der Mischer (5a, 5b, 5c) eintreten kann, wobei das Steuern das Steuern des mindestens einen Ventils (6a, 6b, 6c) von einem Steuersystem (21) umfasst, das in Kommunikationskontakt mit der Druckmessvorrichtung (7) und dem mindestens einen Ventil (6a, 6b, 6c) bereitgestellt ist.

2. Verfahren nach Anspruch 1, wobei der Schritt des Steuerns des mindestens einen Ventils (6a, 6b, 6c) in Abhängigkeit von der gemessenen Druckdifferenz umfasst, dass verunreinigtes Öl in zwei oder mehr Mischer (5a, 5b, 5c) eintritt, wenn die gemessene Druckdifferenz über eine Druckdifferenzschwelle ansteigt.

3. Verfahren nach Anspruch 1 oder 2, wobei der Schritt des Steuerns des mindestens einen Ventils (6a, 6b, 6c) das Steuern des mindestens einen Ventils (6a, 6b, 6c) umfasst, um zu ermöglichen, dass verunreinigtes Öl in einen zusätzlichen Mischer (5b, 5c) eintritt, wenn eine gemessene Druckdifferenz über eine Druckdifferenzschwelle ansteigt.

4. Verfahren nach einem der vorhergehenden Ansprüche, ferner umfassend den Schritt des Hinzufügens eines Trennhilfsmittels zu dem verunreinigten Öl vor oder bei dem Mischen des verunreinigten Öls in dem Mischsystem (3).

5. Verfahren nach einem der vorhergehenden Ansprüche, wobei der Schritt des Abscheidens des verunreinigten Öls in der Abscheidevorrichtung (11) das Zentrifugieren des verunreinigten Öls umfasst, wobei die Abscheidevorrichtung ein Zentrifugalabscheider (11) ist und wobei eine schwere Phase und eine leichte Phase aus dem Zentrifugalabscheider (11) entnommen werden.

6. Verfahren nach einem der vorhergehenden Ansprüche, ferner umfassend einen Schritt des Messens einer oder mehrerer Eigenschaften in einer leichten Phase und/oder schweren Phase, die aus einem Leichtphasenauslass (11a) und/oder einem Schwerphasenauslass (11b) der Abscheidevorrichtung (11) entnommen werden, wobei die eine oder die mehreren Eigenschaften eines oder mehrere aus einer Dichte, einer Viskosität, einer Durchflussrate, einer Menge an Schwerphasengehalt in der leichten Phase umfasst und wobei der Schritt des Steuerns des mindestens einen Ventils (6a, 6b, 6c) in dem Mischsystem (3) ferner von mindestens einem Wert der gemessenen einen oder mehreren Eigenschaften abhängt.

7. Verfahren nach Anspruch 2 oder 3 und **6,** wobei die Druckdifferenzschwelle in Abhängigkeit von mindestens einem Wert der gemessenen einen oder mehreren Eigenschaften definiert wird.

8. Ölreinigungssystem, das Folgendes umfasst:
- ein Mischsystem (3) mit einem Einlass (3a), über den verunreinigtes Öl, das in dem Ölreinigungssystem gereinigt werden soll, in das Mischsystem (3) eingebracht werden kann;
- eine Abscheidevorrichtung (11), die einen Einlass (12) umfasst, der fluidisch mit einem Auslass (3b) des Mischsystems (3), gegebenenfalls über eine oder mehrere andere Einheiten (28) des Ölreinigungssystems, verbunden ist,
wobei das Mischsystem (3) mindestens zwei parallel verbundene Mischer (5a, 5b, 5c) und mindestens ein Ventil (6a, 6b, 6c) umfasst, das gesteuert werden kann, um zu ermöglichen, dass verunreinigtes Öl in einen oder mehrere der Mischer (5a, 5b, 5c) eintritt, wobei das Mischsystem (3) ferner eine Druckmessvorrichtung (7) umfasst, die mindestens zwei Drucksensoren (7a, 7b) umfasst, die in dem Mischsystem (3) so positioniert sind, dass sie eine Druckdifferenz über mindestens einen der Mischer (5a, 5b, 5c) und/oder über das gesamte Mischsystem (3) messen können,
wobei das Ölreinigungssystem ferner ein Steuersystem (21) umfasst, wobei das Steuersystem (21) in Kommunikationskontakt mit der Druckmessvorrichtung (7) und mit dem mindestens einen Ventil (6a, 6b, 6c) bereitgestellt ist und wobei das Steuersystem (21) dazu ausgelegt ist, das mindestens eine Ventil (6a, 6b, 6c) so zu steuern, dass das verunreinigte Öl in einen oder mehrere der Mischer (5a, 5b, 5c) eintreten kann, in Abhängigkeit der gemessenen Druckdifferenz über mindestens einen der Mischer (5a, 5b, 5c) und/oder über das gesamte Mischsystem (3).

9. Ölreinigungssystem nach Anspruch 8, wobei das Steuersystem (21) dazu ausgelegt ist, das mindestens eine Ventil (6a, 6b, 6c) zu steuern, um zu ermöglichen, dass verunreinigtes Öl in zwei oder mehr Mischer (5a, 5b, 5c) eintritt, wenn die gemessene Druckdifferenz über eine Druckdifferenzschwelle ansteigt.

10. Ölreinigungssystem nach Anspruch 8 oder 9, wobei das Steuersystem (21) dazu ausgelegt ist, das mindestens eine Ventil (6a, 6b, 6c) zu steuern, um zu ermöglichen, dass verunreinigtes Öl in einen zusätzlichen Mischer (5b, 5c) eintritt, wenn eine gemessene Druckdifferenz über eine Druckdifferenzschwelle ansteigt.

11. Ölreinigungssystem nach einem der Ansprüche 8-10, ferner umfassend einen Trennhilfsmitteltank (25), der in dem System so verbunden ist, dass Trennhilfsmittel aus dem Trennhilfsmitteltank (25) zu dem verunreinigten Öl hinzugefügt werden kann, bevor es in das Mischsystem (3) oder direkt in jeden der Mischer (5a, 5b, 5c) geleitet wird.

12. Ölreinigungssystem nach einem der Ansprüche 8-11, wobei die Mischer (5a, 5b, 5c) statische Inline-Mischer sind.

13. Ölreinigungssystem nach einem der Ansprüche 8-12, wobei die Abscheidevorrichtung (11) ein Zentrifugalabscheider (11) ist.

14. Ölreinigungssystem nach Anspruch 10 und einem der Ansprüche 8-13, ferner umfassend mindestens einen Sensor (27a, 27b), der in Fluidverbindung mit einem Leichtphasenauslass (11a) von der Abscheidevorrichtung (11) und/oder einem Schwerphasenauslass (11b) von der Abscheidevorrichtung (11) positioniert ist, wobei der Sensor (27a, 27b) zum Messen einer oder mehrerer Eigenschaften ausgelegt ist, wobei die eine oder mehreren Eigenschaften eines oder mehrere aus einer Dichte, einer Viskosität, einer Menge an Schwerphasengehalt in der Leichtphase und einer Durchflussrate umfassen, wobei der mindestens eine Sensor (27a, 27b) in Kommunikationskontakt mit dem Steuersystem (21) bereitgestellt ist und wobei das Steuersystem (21) dazu ausgelegt ist, das mindestens eine Ventil (6a, 6b, 6c) in Abhängigkeit von mindestens einem Wert der einen oder der mehreren gemessenen Eigenschaften zu steuern.

15. Ölreinigungssystem nach Anspruch 9 oder 10 und Anspruch 14, wobei das Steuersystem (21) dazu ausgelegt ist, die Druckdifferenzschwelle in Abhängigkeit von mindestens einem Wert der gemessenen einen oder mehreren Eigenschaften zu definieren.

## Revendications

1. Procédé de purification d'huile contaminée, comprenant les étapes suivantes :
- l'introduction d'huile contaminée dans un système de mélange (3) comprenant au moins deux mélangeurs (5a, 5b, 5c) raccordés en parallèle et au moins une vanne (6a, 6b, 6c) susceptible d'être commandée pour permettre à de l'huile contaminée de pénétrer dans un ou plusieurs des mélangeurs (5a, 5b, 5c) ;
- le mélange de l'huile contaminée dans le système mélangeur (3) ;
- le transfert de l'huile contaminée mélangée depuis le système mélangeur (3) vers un dispositif de séparation (11), éventuellement par le biais d'une ou de plusieurs autres unités (28) du système de purification d'huile ;
- la séparation de l'huile contaminée dans le dispositif de séparation (11),
dans lequel l'étape de mélange comprend :
- la mesure d'une différence de pression à travers au moins un des mélangeurs (5a, 5b, 5c) et/ou à travers l'ensemble du système mélangeur (3), ladite mesure comprenant la mesure d'au moins deux pressions par un dispositif de mesure de pression (7) comprenant au moins deux capteurs de pression (7a, 7b) qui sont positionnés dans le système mélangeur (3) de manière à pouvoir mesurer une différence de pression à travers au moins un des mélangeurs (5a, 5b, 5c) et/ou à travers l'ensemble du système mélangeur (3) ; et
- la commande de l'au moins une vanne (6a, 6b, 6c) dans le système mélangeur (3) de manière à permettre à l'huile contaminée de pénétrer dans un ou plusieurs des mélangeurs (5a, 5b, 5c) en fonction de la différence de pression mesurée, ladite commande comprenant la commande de l'au moins une vanne (6a, 6b, 6c) à partir d'un système de commande (21) qui est en contact de manière communicative avec le dispositif de mesure de pression (7) et l'au moins une vanne (6a, 6b, 6c).

2. Procédé selon la revendication 1, dans lequel ladite étape de commande de l'au moins une vanne (6a, 6b, 6c) en fonction de la différence de pression mesurée comprend le fait de permettre à de l'huile contaminée de pénétrer dans au moins deux mélangeurs (5a, 5b, 5c) lorsque la différence de pression mesurée passe au-delà d'un seuil de différence de pression.

3. Procédé selon la revendication 1 ou 2, dans lequel l'étape de commande de l'au moins une vanne (6a, 6b, 6c) comprend la commande de l'au moins une vanne (6a, 6b, 6c) pour permettre à de l'huile contaminée de pénétrer dans un mélangeur (5b, 5c) supplémentaire lorsqu'une différence de pression mesurée passe au-delà d'un seuil de différence de pression.

4. Procédé selon l'une quelconque des revendications précédentes, comprenant en outre l'étape d'ajout d'un adjuvant de séparation à l'huile contaminée avant ou lorsque l'huile contaminée est mélangée dans le système mélangeur (3).

5. Procédé selon l'une quelconque des revendications précédentes, dans lequel l'étape de séparation de l'huile contaminée dans le dispositif de séparation (11) comprend la centrifugation de l'huile contaminée, dans lequel le dispositif de séparation est un séparateur centrifuge (11) et moyennant quoi une phase lourde et une phase légère sont récupérées du séparateur centrifuge (11).

6. Procédé selon l'une quelconque des revendications précédentes, comprenant en outre une étape de mesure d'une ou de plusieurs propriétés dans une phase légère et/ou une phase lourde récupérées d'une sortie de phase légère (11a) et/ou d'une sortie de phase lourde (11b) du dispositif de séparation (11), dans lequel lesdites une ou plusieurs propriétés comprennent une densité et/ou une viscosité et/ou un débit et/ou une quantité de phase lourde contenue dans la phase légère, et dans lequel ladite étape de commande de l'au moins une vanne (6a, 6b, 6c) dans le système mélangeur (3) est fonction en outre d'au moins une valeur des une ou plusieurs propriétés mesurées.

7. Procédé selon les revendications 2 ou 3 et 6, dans lequel le seuil de différence de pression est défini en fonction d'au moins une valeur des une ou plusieurs propriétés mesurées.

8. Système de purification d'huile, comprenant :
- un système mélangeur (3) comprenant une entrée (3a) par laquelle de l'huile contaminée destinée à être purifiée dans le système de purification d'huile peut être introduite dans le système mélangeur (3) ;
- un dispositif de séparation (11) comprenant une entrée (12) qui est raccordée fluidiquement à une sortie (3b) dudit système mélangeur (3), éventuellement par le biais d'une ou de plusieurs autres unités (28) du système de purification d'huile,
dans lequel ledit système mélangeur (3) comprend au moins deux mélangeurs (5a, 5b, 5c) raccordés en parallèle et au moins une vanne (6a, 6b, 6c) susceptible d'être commandée pour permettre à de l'huile contaminée de pénétrer dans un ou plusieurs des mélangeurs (5a, 5b, 5c), ledit système mélangeur (3) comprenant en outre un dispositif de mesure de pression (7) comprenant au moins deux capteurs de pression (7a, 7b) qui sont positionnés dans le système mélangeur (3) de manière à pouvoir mesurer une différence de pression à travers au moins un des mélangeurs (5a, 5b, 5c) et/ou à travers l'ensemble du système mélangeur (3),
ledit système de purification d'huile comprenant en outre un système de commande (21), ledit système de commande (21) étant en contact de manière communicative avec le dispositif de mesure de pression (7) et avec l'au moins une vanne (6a, 6b, 6c), et le système de commande (21) étant configuré pour commander l'au moins une vanne (6a, 6b, 6c) de manière à permettre à l'huile contaminée de pénétrer dans un ou plusieurs des mélangeurs (5a, 5b, 5c) en fonction de la différence de pression mesurée à travers au moins un des mélangeurs (5a, 5b, 5c) et/ou à travers l'ensemble du système mélangeur (3).

9. Système de purification d'huile selon la revendication 8, dans lequel ledit système de commande (21) est configuré pour commander l'au moins une vanne (6a, 6b, 6c) pour permettre à de l'huile contaminée de pénétrer dans au moins deux mélangeurs (5a, 5b, 5c) lorsque la différence de pression mesurée passe au-delà d'un seuil de différence de pression.

10. Système de purification d'huile selon la revendication 8 ou 9, dans lequel ledit système de commande (21) est configuré pour commander l'au moins une vanne (6a, 6b, 6c) pour permettre à de l'huile contaminée de pénétrer dans un mélangeur (5b, 5c) supplémentaire lorsqu'une différence de pression mesurée passe au-delà d'un seuil de différence de pression.

11. Système de purification d'huile selon l'une quelconque des revendications 8 à 10, comprenant en outre une cuve (25) d'adjuvant de séparation qui est raccordée dans le système de manière à permettre l'ajout d'adjuvant de séparation provenant de la cuve (25) d'adjuvant de séparation à l'huile contaminée avant son introduction dans le système mélangeur (3), ou directement dans chacun des mélangeurs (5a, 5b, 5c).

12. Système de purification d'huile selon l'une quelconque des revendications 8 à 11, dans lequel lesdites mélangeurs (5a, 5b, 5c) sont des mélangeurs statiques en ligne.

13. Système de purification d'huile selon l'une quelconque des revendications 8 à 12, dans lequel ledit dispositif de séparation (11) est un séparateur centrifuge (11).

14. Système de purification d'huile selon la revendication 10 et l'une quelconque des revendications 8 à 13, comprenant en outre au moins un capteur (27a, 27b) positionné en raccordement fluidique avec une sortie de phase légère (11a) du dispositif de séparation (11) et/ou une sortie de phase lourde (11b) du dispositif de séparation (11), dans lequel ledit capteur (27a, 27b) est configuré pour mesurer une ou plusieurs propriétés, dans lequel lesdites une ou plusieurs propriétés comprennent une densité et/ou une viscosité et/ou une quantité de phase lourde contenue dans la phase légère et/ou un débit, dans lequel ledit au moins un capteur (27a, 27b) est en contact de manière communicative avec le système de commande (21), et dans lequel le système de commande (21) est configuré pour commander l'au moins une vanne (6a, 6b, 6c) en fonction d'au moins une valeur desdites une ou plusieurs propriétés mesurées.

15. Système de purification d'huile selon la revendication 9 ou 10 et la revendication 14, dans lequel le système de commande (21) est configuré pour définir le seuil de différence de pression en fonction d'au moins une valeur des une ou plusieurs propriétés mesurées.
